Europäisches Patentamt

European Patent Office

Office européen des brevets

(11) Publication number: 0 405 944 A1

## EUROPEAN PATENT APPLICATION

(21) Application number: 90307032.4

(22) Date of filing: 27.06.90

(51) Int. Cl.⁵: A01C 21/00, C05G 3/00

(30) Priority: 28.06.89 GB 8914791

(43) Date of publication of application:
02.01.91 Bulletin 91/01

(84) Designated Contracting States:
AT BE CH DE DK ES FR GR IT LI LU NL SE

(71) Applicant: FISONS plc
Fison House Princes Street
Ipswich Suffolk IP1 1QH(GB)

(72) Inventor: Rainbow, Arnold
35 High Road, Trimley St. Mary
Felixstowe, Suffolk(GB)

(74) Representative: Craig, Christopher Bradberry
et al
Fisons plc 12 Derby Road
Loughborough Leicestershire LE11 0BB(GB)

(54) A fertilizing device.

(57) There is provided a fertilizing device comprising a water permeable sachet (1) holding a sustained-release fertilizer composition (4). A method of use of the device is also provided.

Fig. 1.

## A FERTILIZING DEVICE

This invention relates to a fertilizing device, more particularly to a plant fertilizing device containing a sustained-release fertilizer composition.

Water-soluble fertilizers for administration during the watering of plants have been known for many years. They have the disadvantage that they must be applied regularly, for example once a week, and that fertilizer is lost if the watering solution is spilled, for example by running over the top of the pot of a pot-plant. In addition, it is not easy to judge how much water a pot-plant will take in advance, and so some of the watering solution may have to be discarded if an excess is made up.

Also, solid formulations of plant fertilizer are known. At present, they are usually measured by hand, which often leads to the generation of unpleasant dust, and can cause skin disorders on contact with the hands. A further disadvantage of loose solid fertilizer formulations is that they may be spilled. If the spillage occurs outdoors the fertilizer is particularly difficult to recover, and some will inevitably be lost.

Japanese Patent Application No 62-21783 discloses a fertilizing device comprising a fertilizer salt contained in a water permeable bag. In use, the device is placed in a container of water (for example a watering can) which is about to be applied to the plant's roots so that the fertilizer salt dissolves in the water, and is then delivered to the plant when it is watered. The rate of release of fertilizer from the device is desirably fast. Although the device removes the need to measure out plant fertilizer, it still needs to be applied at the usual frequency.

We have now devised a fertilizer device which overcomes the disadvantages of the prior art.

According to the present invention, there is provided a fertilizing device comprising a water permeable sachet holding a sustained-release fertilizer composition.

By "sustained-release" we mean that the fertilizer releases nutrients over a sustained period of time, for example from 1 to 6 months. Thus, the device may be placed in soil, for example in a flower bed, in the spring, and left to release nutrients to the growing plants until autumn. A new device may be added the following year. When used in the pot of a pot-plant, the device may simply be added to the growing medium by placing in the pot when repotting. In either case, the device may be added at any other time by simply placing it in a cavity in the growing medium and covering over. The present invention includes a method of applying fertilizer to a plant in a growing medium which comprises placing a fertilizer device as disclosed herein into or onto the growing medium adjacent to the plant.

We prefer the composition to comprise pellets of fertilizer coated in plastics material which is provided with a plurality of microscopic pores. Such compositions have been shown to have good sustained-release properties.

Desirably, the composition comprises inorganic salts, for example nitrogen, phosphorus and potassium salts. However, fertilizer compositions comprising organic materials may be employed, such as bone meal, hoof and horn, hide meal, dried blood or fish meal.

We particularly prefer the fertilizer composition to be commercially available **FICOTE** (UK Registered Trade Mark). In this case, suitable quantities of composition for the sachet to hold are from 1g to 100g, preferably 5g to 50g, more preferably 10g to 30g.

The sachet must be readily wetted even with cold water. It is also preferably biodegradeable (indeed, the primary function of the sachet is to allow measured administration of nutrients to a plant and once the device has been placed in a plant growing medium the sachet is no longer required). Thus, the sachet preferably comprises paper material (most preferably perforated), for example tea-bag scrim. Clearly, the perforations must be sufficiently small to retain the fertilizer composition within the sachet.

The sachet may comprise plastics material. When the sachet is made of paper, we prefer the paper to include some plastics material, for example plastics fibres, so that the sachet may be simply formed by heat-sealing.

In order to aid wetting of the sachet, it may comprise a wetting agent, for example an anionic surfactant such as sodium lauryl sulphate.

To facilitate handling of the device, we prefer the space within the sachet to be less than half occupied. This allows the sachet to be comparatively weak without there being a danger of rupture during handling.

Devices according to the present invention have the advantages that there is no need to measure out fertilizer, and that they only need be administered to a plant infrequently, which is particularly advantageous if the growing medium is inaccessible, for example in a hanging basket or a window box.

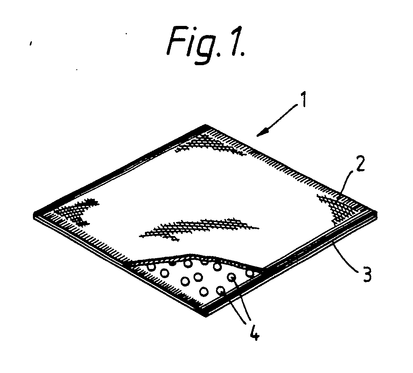

A preferred embodiment of the present invention will now be described, by way of example, with reference to the accompanying drawing (Figure 1), which is a perspective view of a fertilizer device according to the invention, partly cut away.

A fertilizer device comprises a rectangular sachet (1) made from two sheets of biodegradeable tea-bag scrim (2,3) which have been heat-sealed together. The sachet encapsulates 30g of the sustained release fertilizer composition **FICOTE** (UK Registered Trade Mark)(4). Less than 50% of the space inside the sachet is occupied.

In use, the sachet is buried in the growing medium adjacent to a plant or plants (for example a group of plants in a window box) to be fertilized, and provides nutrients to the plant or plants over a period of approximately four months as water (for example rain water) percolates into and out of the sachet.

**Claims**

1. A fertilizing device comprising a water permeable sachet holding a fertilizer composition; characterized in that the composition is a sustained-release composition.

2. A fertilizing device according to claim 1, wherein the composition comprises pellets of fertilizer coated in plastics material which is provided with a plurality of microscopic pores.

3. A fertilizing device according to claim 2, wherein the composition comprises inorganic salts.

4. A fertilizing device according to claim 3, wherein the inorganic salts comprise nitrogen, phosphorus and potassium salts.

5. A fertilizing device according to any one of the preceding claims, wherein the sachet is biodegradeable.

6. A fertilizing device according to any one of the preceding claims, wherein the sachet comprises paper material.

7. A fertilizing device according to claim 6, wherein the paper material is perforated.

8. A fertilizing device according to any one of the preceding claims, wherein the sachet comprises plastics material.

9. A fertilizing device according to any one of the preceding claims, wherein the sachet comprises a wetting agent.

10. A method of applying fertilizer to a plant in a growing medium which comprises placing a fertilizer device according to any one of the preceding claims into or onto the growing medium adjacent to the plant.

# Fig.1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 105, no. 1, July 1986, page 547, column 1, abstract no. 5734p, Columbus, Ohio, US; & JP-A-61 47 788 (HOKUBU K.K.) 08-03-1986 | 1-3,6,7 ,10 | A 01 C   21/00 C 05 G    3/00 |
| Y | GB-A-1 535 854  (D. BARNES)(13-12-1978) * Pages 1-3, claims * | 1 | |
| A | | 5,7,10 | |
| Y | GB-A-  815 829  (FISONS LTD)(01-07-1959) * Pages 1-3, claims * | 1 | |
| A | | 2-4 | |
| A | FR-A-2 522 923  (LABORATOIRE ALGOCHIMIE)(16-09-1983) * Pages 1-4, claims * | 1,3,7,8 ,10 | |
| A | DE-A-  832 358  (DIPL.-LANDW. ERICH FISCHER)(25-02-1952) * Claim 1; figure 2; pages 1-3 * | 1,3,5,6 ,10 | |

TECHNICAL FIELDS SEARCHED (Int. Cl.4)

A 01 C
A 01 G
C 05 G

The present search report has been drawn up for all claims

| Place of search | Date of completion of the search | Examiner |
|---|---|---|
| THE HAGUE | 25-09-1990 | VAN WALLENE A.M.A. |

EPO FORM 1503 03.82 (P0401)